# EUROPEAN PATENT APPLICATION

(11) **EP 2 319 619 A1**
(43) Date of publication of application: **11.05.2011**
(21) Application number: 09175004.2
(22) Date of filing: 04.11.2009
(51) Int. Cl.: B01J 20/34, C02F 1/28

(54) **Method and an apparatus for regeneration of an adsorbent**

(71) Applicant: SIEMENS AKTIENGESELLSCHAFT, 80333 München (DE)
(72) Inventor: Gensler, Rudolf, 596288 Singapore (SG); Lee, Ai Cheng, 650524, Singapore (SG); Li, Chunxiang, 130035, Singapore (SG); Ma, Bing, 128036, Singapore (SG); Zhu, XinHao, 610355, Singapore (SG)

(57) **Abstract**

A method of regeneration of an adsorbent (11) including a contaminant (12), the method comprising simultaneously exposing the adsorbent (11) to both at least one oxidizer (13) and an ultrasound irradiation (18) for oxidizing the contaminant (12) to regenerate the adsorbent (11) is disclosed. The regenerated adsorbent (11) can be used for water treatment process. The adsorbent (11) is at least one of an alumina, activated carbon and a zeolitic material. The oxidizer (13) can be at least one of a chemical oxidizer, a light oxidizer or a photocatalyst.

## Description

Description Method and an apparatus for regeneration of an adsorbent The present invention relates to a method and an apparatus for regeneration of an adsorbent including a contaminant.

Many of today's industrial processes use adsorbents to adsorb impurities from waste water for purification and removal of impurities from the water. Adsorbents may also be used to separate components in a process or to isolate trace contaminants for quantitative analysis. To the end of reclaiming the adsorbent which has adsorbed the contaminants and the water, it is necessary to eliminate the adsorbed contaminants and water from the adsorbent.

Various processes have been suggested to destroy the contaminants to regenerate the adsorbents. For example, U.S. Pat. No.5,182,030 discloses a method of regeneration of adsorbents using an advanced oxidation process. The document discloses a method of regenerating adsorbents by oxidizing the adsorbed contaminants by using photo-energy such as solar radiation or artificial light.

It is an object of the invention to improve the regeneration of an absorbent.

This problem is solved by a method according to claim 1 and an apparatus according to claim 11.

By exposing the adsorbent containing contaminants to the oxidizer and ultrasound irradiation simultaneously, a synergetic effect is achieved which results in a greater oxidation rate of the contaminants to regenerate the adsorbent. Both the ultrasound irradiation and the other oxidizer have an oxidizing capacity. The additional synergetic effect is based on a micro-mixing effect provided by the ultrasound which leads to a higher oxidizing strength of the other oxidizer.

According to a preferred embodiment, the adsorbent is concentrated in an aqueous medium. This enhances the propagation of ultrasound irradiation as its transmission properties are higher in water.

According to another preferred embodiment, the adsorbent is at least one of an alumina, activated carbon, a zeolitic material and other inorganic materials. These adsorbents have the capacity to effectively adsorb contaminants into its surface, thereby concentrating even traces of organic contaminants from large volumes of water.

According to another preferred embodiment, the oxidizer is a chemical oxidizer. These oxidizers help to increase the rate of oxidation of the contaminants.

According to another preferred embodiment, the chemical oxidizer includes at least one of oxygen, ozone, hydrogen peroxide, and Fenton's reagent. These oxidizers have a high oxidizing capacity.

According to another preferred embodiment, the oxidizer is a light oxidizer. A light oxidizer can easily be provided.

According to another preferred embodiment, the light oxidizer includes at least one of an Ultraviolet (UV) light, solar light, artificial light. These kinds of light oxidizers provide a strong oxidizing effect.

According to another preferred embodiment, the oxidizer includes at least one of a photocatalyst. The photocatalyst is designed to be a good adsorbent to remove organic contaminants.

According to another preferred embodiment, a method of treating water containing a contaminant, the method comprising steps of passing the water to be treated through an adsorption unit containing an adsorbent for the contaminant, providing the adsorbent containing the contaminant to a reaction chamber and regenerating the adsorbents in the reaction chamber according to the method mentioned above. By providing the adsorbent from the adsorption unit and regenerating it separately in the reaction chamber, a higher concentration of the contaminant is achieved, which can be oxidized more effectively. This reduced the amount of oxidizer necessary and improves the processing time, which in turn results in lower costs.

According to another preferred embodiment, the regenerated adsorbent is supplied to the adsorption unit to treat the water. This minimizes the waste generation and helps to reduce the cost as the regenerated adsorbent can be used again for purifying water.

Another aspect of the invention is an apparatus for regenerating an adsorbent including a contaminant, the apparatus comprising a reaction chamber to receive the adsorbent, a means for providing an oxidizer to the reaction chamber and an ultrasound device adapted to provide an ultrasound irradiation to the adsorbent. This is a compact design including the accessorial devices required for effective functioning and is easy to operate and maintain. According to another preferred embodiment, the apparatus further includes a mechanical mixer adapted to mix the adsorbent with the oxidizer. The mechanical mixing creates an environment which allows the oxidation of the contaminants to proceed at a fast rate.

The present invention is further described hereinafter with reference to illustrated embodiments shown in the accompanying drawings, in which:
- FIG 1: illustrates an apparatus for regenerating an adsorbent containing a contaminant according to an embodiment of the invention; and
- FIG 2: shows a schematic overview of a water treatment system employing an apparatus of FIG.1.

Various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

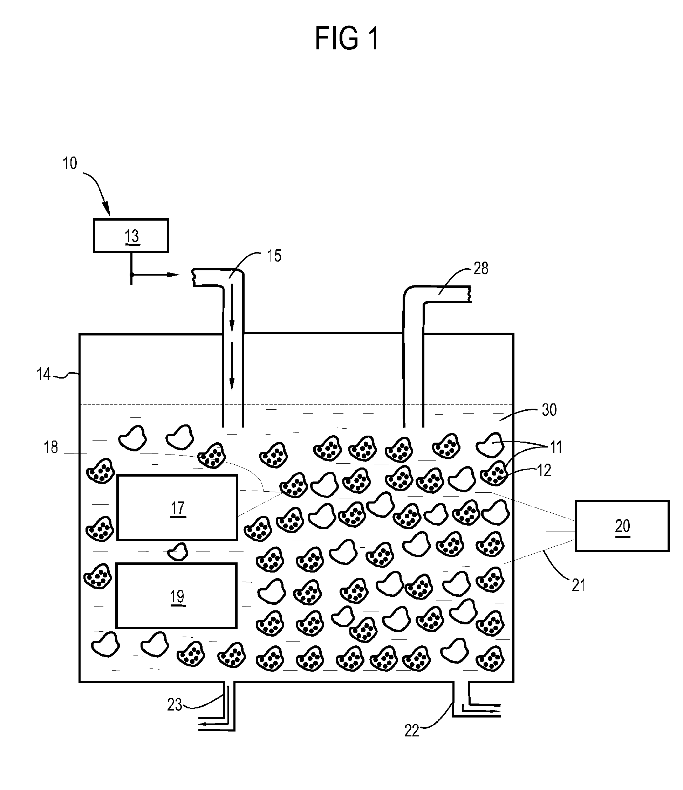

FIG 1 illustrates an apparatus 10 for regenerating an adsorbent 11 containing a contaminant 12 according to an embodiment of the invention. The apparatus 10 includes a reaction chamber 14 to collect the adsorbent 11 containing a contaminant 12 adsorbed from water. The reaction chamber 14 is provided with an aperture, included as a conduit 28 to draw in the adsorbent 11. The apparatus 10 includes a means, such as an oxidizer inlet 15 for providing an oxidizer 13 to the reaction chamber 14.

The apparatus 10 further includes at least one ultrasound device 17 in a coupled relationship with the reaction chamber 14 to provide an ultrasound irradiation 18 to the adsorbent 11 and oxidizer 13. The ultrasound irradiation 18 is applied at a frequency ranging from few kilohertz to even megahertz.

The adsorbent 11 herein can be selected from a group comprising of activated carbon, titania, silica, iron oxide, manganese oxide, lanthanum oxide, ceria, alumina, zeolite, hydrotalcite, sepiolite, diatomite, cellulose, cellulose, bentonite, organic compounds modified adsorbents or the mixture of adsorbents mentioned herein.

The contaminants 12 adsorbed by the adsorbent 11 generally contain organic contaminants. Organic contaminants include aromatic solvents such as benzene, toluene, nitrobenzenes, chlorinated aromatics like PCBs, chlorobenzenes, chloroaphthalene, phenol and chlorophenols, polynuclear aromatics like acenaphthene, benzopyrenes, pesticides and herbicides like DDT, aldrin, chlordane, heptachlor, chlorinated aliphatics (carbon tetrachloride, chloroalkyl ethers), high molecular weight hydrocarbons such as dyes, gasoline, amines and the like.

Here the adsorbent 11 is concentrated using an aqueous medium 16, preferably water. This enhances the oxidation of contaminants as the ultrasound waves can propagate only through a medium.

The apparatus 10 further includes a mechanical mixer 19 to combine the adsorbent 11 with the oxidizer 13. The ultrasound irradiation 18 is capable of generating hydroxyl radicals to oxidize the contaminants 12. These hydroxyl radicals are capable of activating the oxidizer 13, improve the formation of more hydroxyl radicals to oxidize the contaminants 13 directly. The adsorbent 11 containing the contaminant 12 is introduced into the chamber 14 via an adsorbent conduit 28 connected to the chamber 14. The apparatus 10 is then operated in a conventional manner to oxidize the contaminants 12 and regenerate the spent adsorbent 11.

Alternatively the apparatus 10 can also be provided with an ultraviolet device 20 for providing a light oxidizer such as an ultraviolet radiation 21 to the adsorbent 11. An UV lamp is selected to provide UV radiation 20 with a wavelength similar to that is most absorbed by the contaminant or mixture of contaminants in the water to be treated or is most absorbed by the chemical oxidizer being employed. The UV device 20 may be mounted outside of reaction chamber 14, or may be disposed within the chamber 14. For an UV device 20 mounted within the chamber 14, it can be placed inside a protective tube of material transparent to UV-radiation 21 to protect the UV device 20 from the water and contaminants 12. Here the UV radiation 21 can be substituted with similar light oxidizers such as solar light or any artificial lights capable of creating the same reaction effect.

The constant rate of reaction between the oxidizer 13 and the hydroxyl radicals created by the ultrasound irradiation 18 produces a synergetic effect representing the degradation rate enhancement due to combined treatment methods. In the combined UV/US/oxidizer processes, organic compounds are oxidized through free radical attack and the synergetic effect predicted by combined process. If the completely mixed solution is assumed, the degradation of contaminants is affected by the location of UV lamps, ultrasonic device, oxidizer dosage, strength of UV radiation, ultrasound strength and the physical and geometrical characteristics of the reaction chamber 14. The maximum rate of energy absorption and ultrasonic field overlap can produce a highest synergetic effect. Therefore, for designing an apparatus, the location of equipment employing for irradiation should be selected so as to maximize the synergetic effect of the process.

The reaction chamber 14 is also provided with an outlet 22 at the bottom thereof, the outlet 22 leading to the adsorption units 25. It may also include a discharge line 23 to discharge the water or other contaminants for maintenance purpose.

The reaction chamber 14 herein may be replaced by reactors having different geometries and may be irradiated with various natural or artificial light sources. It is understood that the best results when using oxidizer and ultrasound irradiations are achieved when the water being treated encounters the irradiations prior to or simultaneously with the oxidizer.

In an embodiment herein, a photocatalyst can be provided to the chamber for the controlled oxidation of the contaminants. The photocatalysts include semiconductor elements such as Ti02, doped Ti02, Ti02 impregnated to activated carbon etc. These photocatalysts can be activated by the ultraviolet radiation 21, which breaks down the contaminants into environmentally compatible reaction products that can be disposed in an environmentally safe manner. In most cases, the reaction products may be carbon-dioxide, water, or some nitrogen containing compositions such as ammonia or nitrogen oxides.

According to an alternative embodiment, after de-aggregating the adsorbents 11 from the contaminants 12, a stream of water can be provided to the reaction chamber 14 for rinsing off the contaminants or the mineralized end products out of the reaction chamber 14.

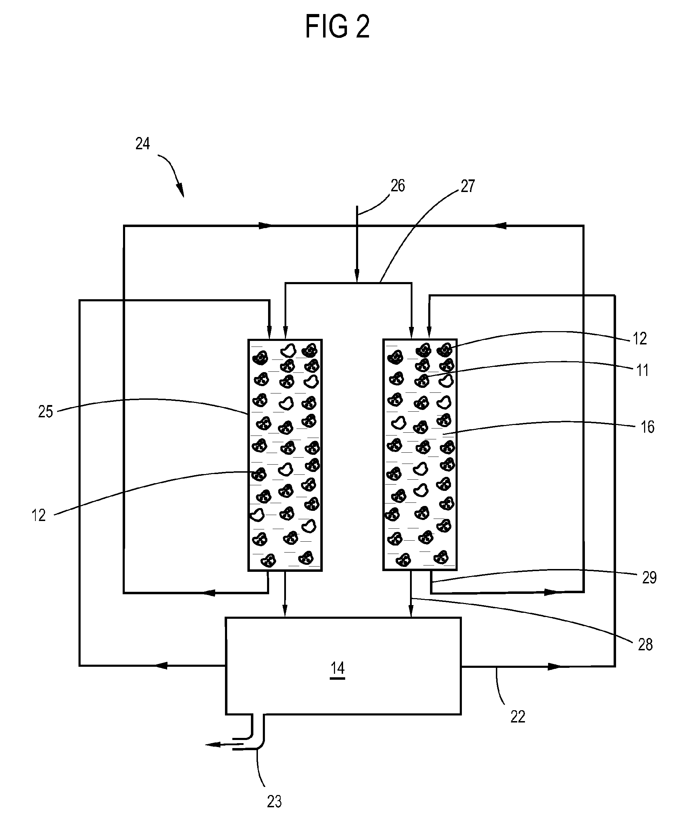

FIG 2 shows a schematic overview of a water treatment system according to an embodiment of the invention. Referring to FIG. 2 in detail, the water treatment system for performing the method of the present invention is generally designated by the reference numeral 24. The reaction chamber 14 shown in FIG.1 is presently preferred for incorporation within the system 24 as it has been found to be effective in the oxidation of contaminants 12 for purification of the water.

The system 24 herein includes at least one adsorption unit 25 packed with an adsorbent 11 to adsorb the contaminants 12 present in the water to be treated and a reaction chamber 14 adapted to regenerate the adsorbent 11 by oxidizing the contaminants 12. Concentrating of the contaminants on the adsorbents helps to improve the utilization efficiency of the oxidation process, which in turn reduces the cost and energy consumption.

At the top of FIG. 2, there is shown an arrow 26 indicating the flow of water from a point of collection to the adsorption unit 25. An influent line 27 is more conventionally used as a means for transporting the water from the point of collection to the adsorption unit 25. This transporting means can be any type of water conveyors including trunk sewers, pipes, canals or other devices designed for the purpose of conveying water.

The adsorption unit 25 is connected with the influent line 27 to receive the water. The adsorbent 11 absorbs the contaminants 12 present in the water and further passes the concentrated adsorbent 11 through a conduit 28 to the reaction chamber 14. The adsorption unit 25 also includes an effluent line 29 to discharge the treated water, which is substantially free of the impurities. The treated water can be either collected at a collection chamber or can be recycled again to the adsorption unit 25 for further treatment, if it does not comply with the standards.

The reaction chamber 14 includes an oxidizer inlet 15 to receive the oxidizer 13 to oxidize the contaminants 12 adsorbed on the adsorbent 11. In the reaction chamber 14, the adsorbent 11 containing the contaminants 12 is exposed to both ultrasonic irradiation 18 and at least one oxidizer 13 simultaneously to oxidize the contaminants 12. The ultrasound device 17 associated with the reaction chamber 14 provides ultrasound irradiations 18 from various directions to the chamber 14 so that they are incident on the adsorbent 11. The term oxidize as used herein refers to either direct photolysis by UV-radiation, or redox reactions with oxygen containing substances like ozone, Fentons reagent, hydrogen peroxide, hydroxyl radicals etc or the use of photocatalysts in the presence of ultrasound radiations.

The oxidation of the contaminants 12 relieves the adsorbent 11 which is then supplied back to the adsorption unit 25 for further treatment of water. This provides for the effective use of the adsorbent 11 in the water treatment process, which in turn reduces the cost and energy consumption. The cycling helps to keep the reaction chamber 14 free and clear of any deposits, thereby maximizing the amount of time that the reaction chamber 14 stays onstream and running effectively. It is also believed that the application of ultrasonic irradiation 18 to an absorbent 11 enhances the reaction rate between the oxidizer 13 and the absorbent 11. Here, the ultrasound irradiations are emitted at a frequency of about which ranges from kilohertz to megahertz, to destroy the largest percentage of contaminants. For purposes of this application, high-frequency ultrasound irradiations include all sound waves having a frequency between 10 kilohertz and 500 kilohertz.

In addition to oxidizing contaminants for treating and purifying a continuous flow of water, the method and system herein may also be separately used to catalyze reactions within a continuous flow of liquid containing reactants. It has been discovered that the cavitations caused by the ultrasonic irradiation accelerates de-aggregation of the aggregated adsorbents formed during filtration process, desorption of the contaminants from the saturated adsorbents and to disperse the adsorbents and contaminants evenly into the oxidizer solution.

The ultrasound can effectively de-aggregate the adsorbent and oxidizers, which improves both the oxidation reaction and adsorption capacity of the adsorbent, and the oxidizing capacity of the oxidizer when they are reused. The use of ultrasound in water treatment process provides a microenvironment mixing effect, thereby improving the homogeneity of the fluid when coupled with a mechanical mixer especially when large quantity of water need to be treated. Also, the ultrasound is able to be transmitted through opaque systems, which is readily adaptable to the fluid containing both solid and liquid phases.

In an embodiment herein, the combination of different oxidizers and the ultrasound irradiation provides for higher synergetic effects for degradability enhancement. Modeling and optimization of the reaction chambers can also be extended to similar cases that is practical for scale up. The effect of different parameters such as residence time, temperature, presence of different ions and acids, oxidizer doses, irradiation sources, recycling ratio etc is better to be embedded in the model. An optimization determines the optimal residence time, optimal size of the equipment, optimal oxidizer doses, optimal operation condition such as oxidizer concentration, type of photocatalyst in the reaction chamber and optimal degradability achieved for the oxidation.

The mineralization of the contaminants in the reaction chamber can be activated by advanced electrochemical oxidation process, for example, electro-Fenton, photoelectro-Fenton processes. The higher degradation power of these processes is due to the large production of oxidizing hydroxyl radicals by reaction between the oxidizer and the ultrasound. The introduction of light oxidizers such as UV radiation accounts for fast photolytic decomposition of the contaminants resulting in higher mineralization rate.

## Claims

1. A method of regeneration of an adsorbent (11) including a contaminant (12), the method comprising simultaneously exposing the adsorbent (11) to both at least one oxidizer (13) and an ultrasound irradiation (18) for oxidizing the contaminant (12) to regenerate the adsorbent (11).

2. The method according to claim 1, wherein the adsorbent (11) is concentrated in an aqueous medium (16).

3. The method according to claim 1 or 2, wherein the adsorbent (11) is at least one of an alumina, activated carbon and a zeolitic material.

4. The method according to any of the claims 1 to 3, wherein the oxidizer (13) is a chemical oxidizer.

5. The method according to claim 4, wherein the chemical oxidizer (13) includes at least one of oxygen, ozone, hydrogen peroxide, and Fenton's reagent.

6. The method according to any of the claims 1 to 5, wherein the oxidizer (13) is a light oxidizer.

7. The method according to claim 6, wherein the light oxidizer includes at least one of an Ultraviolet (UV) light, solar light, and an artificial light.

8. The method according to any of the claims 1 to 7, wherein the oxidizer (13) includes at least one of a photocatalyst.

9. A method of treating water containing a contaminant (12), the method comprising steps of:
- passing the water to be treated through an adsorption unit (25) containing an adsorbent (11) for the contaminant (12);
- providing the adsorbent (11) containing the contaminant (12) to a reaction chamber (14); and
- regenerating the adsorbents (11) in the reaction chamber (10) according to the method according to any of the claims 1 to 8.

10. The method according to claim 9, wherein the regenerated adsorbent (11) is supplied to the adsorption unit (25) to treat the water.

11. An apparatus (10) for regenerating an adsorbent (11) including a contaminant (12), the apparatus (10) comprising:
- a reaction chamber (14) to receive the adsorbent (11);
- a means for providing an oxidizer (13) to the reaction chamber (14); and
- an ultrasound device (17) adapted to provide an ultrasound irradiation (18) to the adsorbent (11).

12. The apparatus (10) according to claim 11, wherein the means for providing the oxidizer (13) includes at least one of a source for a chemical.

13. The apparatus (10) according to claim 11, wherein the means for providing the oxidizer (13) includes at least one of a source for a light.

14. The apparatus (10) according to claim 11 or 12, wherein the apparatus (10) further comprises a mechanical mixer (19) adapted to mix the adsorbent (11) with the oxidizer (13).

15. A water treatment system (24) for treating water containing a contaminant (12), wherein the system (24) comprises:
- an adsorption unit (25) containing an adsorbent (11) to adsorb the contaminants (12) in the water supplied to the adsorption unit (25);
- an apparatus (10) according to any of the claims 11 to 13; and
- a conduit (28) for providing the adsorbent (11) from the adsorption unit (25) to the reaction chamber (14) of the apparatus (10).
